# EUROPÄISCHE PATENTSCHRIFT

(11) **EP 0 718 020 B1**
(45) Veröffentlichungstag und Bekanntmachung des Hinweises auf die Patenterteilung: **13.08.1997**
(21) Anmeldenummer: 95119689.8
(22) Anmeldetag: 14.12.1995
(51) Int. Cl.: B01D 25/127, B01D 25/34

(54) **Filterpresse zur Filtration von Suspensionen**
Filter press for filtering suspensions
Presse filtrante pour la filtration de suspensions

(30) Priorität: 22.12.1994 UA 94128151
(43) Veröffentlichungstag der Anmeldung: 26.06.1996
(73) Patentinhaber: Eberhard Hoesch & Söhne GmbH Verfahrens- und Anlagentechnik, D-52477 Alsdorf (DE)
(72) Erfinder: Ponomarenko, Viktor Germanowitsch, 31099 Charkow (UA); Pawlenko, Valeri Fjodorowitsch, 310168 Charkow (UA); Tschernikow, Viktor Anatoljewitsch, 310202 Charkow (UA); Pitschachtschi, Oleksandr Fjodorowitsch, 310034 Charkow (UA); Stankun, Oleksandr Viktorowitsch, 310093 Charkow (UA); Gutorow, Viktor Michailowitsch, 310142 Charkow (UA)
(74) Vertreter: Bauer, Hubert, Dipl.-Ing.

(56) Entgegenhaltungen:
- EP-A- 0 164 482
- FR-A- 1 450 828
- GB-A- 2 114 908
- US-A- 4 155 830

## Beschreibung

Die Erfindung betrifft eine Filterpresse zur Filtration von Suspensionen, bestehend aus einem Rahmen, einer daran befestigten Stützplatte und Anpreßplatte, einem Satz vertikaler Filterplatten, der zwischen der genannten Stütz- und Anpreßplatte angeordnet ist, wobei jede Filterplatte auf der flüssigkeitsabführenden Seite mit einem Filtergewebe versehen ist, das über zwei Walzen verläuft, sowie einem Mechanismus zum Austrag des Filterkuchens sowie einer Vorrichtung zur Geweberegenerierung.

Eine derartige Filterpresse, die zur Filtration industrieller Suspensionen mit mittlerer und schwerer Filtrierbarkeit vorgesehen ist und beispielsweise bei der Dehydratisierung von Abwasserklärschlamm und anderen flüssigen hydrogenen Systemen in der chemischen Industrie und in angrenzenden Industriezweigen angewendet werden kann, ist aus dem UdSSR-Urheberschein Nr. 148018, IPK B01 D 25/12 bekannt.

Diese Filterpresse besteht aus einem Rahmen mit einer daran befestigten Stütz- und Anpreßplatte sowie einem Satz Filterplatten, der mit Walzen versehen ist, über die ein als Endlosband genähtes Filtergewebe läuft, das sich zwecks Filterkuchenaustrags relativ zu den erwähnten Platten bewegt, sowie aus einem Mechanismus zum Zusammenpressen der Platten und zum Transport des Filtergewebes.

Die genannte Filterpresse zeichnet sich durch eine hohe Effektivität aus, besitzt allerdings den Nachteil, daß es aufgrund der speziellen Konstruktion nicht möglich ist, Filteroberflächen größer als ca. 25 bis 32 m² zu realisieren. Hierdurch wird die Anwendbarkeit dieser Filterpresse wesentlich eingeschränkt.

Aus dem UdSSR-Urheberschein Nr. 285637 IPK B01 D 29/04 ist des weiteren eine Filterpresse bekannt, die bis auf den Transportmechanismus für das Filtergewebe ebenfalls alle obengenannten Elemente aufweist. Anstelle des Transportmechanismus ist diese Filterpresse jedoch mit einem Mechanismus zur Verschiebung der Filterplatten versehen. Bei dieser Filterpresse erfolgt der Filterkuchenaustrag durch aufeinanderfolgende Verschiebung der Filterplatten aus einem Filterpaket in das andere, wobei sich Abschnitte des als endloses Band genähten Filtergewebes zwischen den genannten Platten verklemmen. Hierdurch tritt der Effekt ein, daß sich das Filtergewebe entlang der Filterplatten bewegt und ein Lösen des Filterkuchens vom Filtergewebe, wie im Fall der eingangs beschriebenen Filterpresse, durch eine Berührung zwischen Gewebe und den an jeder Platte befestigten Walzen mit geringem Durchmesser erfolgt.

Durch die vertikale Anordnung der Platten kann bei diesem Filterpressentyp eine Filterfläche von bis zu 100 m² und mehr erreicht werden. Allerdings erlaubt die Konstruktion der Filterpresse nicht, das Wandern des Filtergewebes zum einen oder anderen Plattenrand zu verhindern, wodurch das Gewebe nach kurzer Betriebszeit der Filterpresse den Rand der Filterfläche der Platten verläßt. Hierdurch wird eine manuelle Regulierung der Lage des Filtergewebes in der Filterpresse erforderlich.

Außerdem erfolgt die Filtrierung, bedingt durch die spezielle Konstruktion, durch zwei Filtergewebsschichten hindurch, was die Produktivität der Filterpresse beträchtlich senkt. Dies liegt einerseits darin begründet, daß der Widerstand von zwei zu durchdringenden Schichten im Vergleich zu einer höher ist, und rührt andererseits daher, daß keinerlei Möglichkeit besteht, die Verunreinigungen zu entfernen, die die erste Schicht passieren und von der zweiten zurückgehalten werden. Durch derartige, zwischen den beiden Schichten befindliche Verunreinigungen wird der Filterwiderstand ebenfalls erhöht.

Als weiterer Nachteil dieser Konstruktion ist der hohe, unproduktive Zeitaufwand für den Austrag des Filterkuchens anzusehen, da hierzu alle Filterplatten, wie oben beschrieben, einzeln nacheinander bewegt werden müssen.

Aus dem UdSSR-Urheberschein Nr. 613776, IPK B01 D 25/12 ist schließlich eine Filterpresse bekannt, deren Konstruktion ebenfalls eine Vergrößerung der Filterfläche auf bis zu 100 m² und mehr erlaubt. Diese Filterpresse besteht aus einem Rahmen und einem Klemmechanismus, einer Stütz- und einer Anpreßplatte, die vertikal angeordnet sind, sowie einem Satz Filterplatten, an denen jeweils zwei Walzen befestigt sind, über die das Filtergewebe geführt wird. Während des Vorgangs des Filterkuchenaustrags bewegt sich das Filtergewebe relativ zu den Filterplatten. Das Filtergewebe ist bei dieser Filterpressenkonstruktion für jede Platte separat als endlose Schleife ausgeführt, die die entsprechenden, innerhalb des oberen und unteren Teils der Platte befindlichen Rollen umschlingt. Am Filtergewebe jeder Filterplatte ist ein spezieller Mitnehmer horizontal befestigt, dessen Enden über die Breite der Stoffbahn hinausragen.

Zwecks Austrags des Filterkuchens werden die vorgenannten Mitnehmer nach unten bewegt, wobei das Gewebe mit dem daran haftenden Filterkuchen fortlaufend an den Walzen umgelenkt wird, wodurch sich der Filterkuchen an der unteren Walze löst. Nach Ablösung des Filterkuchens bringen die Mitnehmer das Gewebe in seine Ausgangslage zurück, und der Filterzyklus wiederholt sich.

Bei dieser Filterpresse ist die für den Austrag des Filterkuchens benötigte Zeit im Vergleich zu den vorbeschriebenen Filterpressen wesentlich verkürzt, da sich alle Filterplatten vor dem Beginn der Transportbewegung des Filtergewebes gleichzeitig auseinanderbewegen.

Allerdings erfolgt die Filtration, wie auch bei den oben beschriebenen analogen Konstruktionen, durch zwei Gewebeschichten hindurch, woraus die bereits erwähnten Nachteile (Vergrößerung des Filterwiderstandes, Verringerung der Produktivität, keine Möglichkeit zur Regenerierung des Gewebes) resultieren. Außerdem verdoppelt sich der Verbrauch an Filtergewebe unnötigerweise, wobei die Kosten für diesen Mehrverbrauch bis zu einem Drittel der Gesamtbetriebskosten oder auch mehr ausmachen.

Schließlich ist bei der letztgenannten Filterpresse auch das Problem des Spannens des Filtergewebes beim Arbeitshub der Mitnehmer ungelöst. Der Filterkuchen befindet sich auf Gewebeabschnitten unterhalb der Mitnehmer und somit auf dem entspannten Trum des Gewebetriebes, wodurch gewisse Schwierigkeiten hinsichtlich einer effektiven Ablösung des Filterkuchens vom Gewebe entstehen.

Der Erfindung liegt die Aufgabe zugrunde, bei einer Filterpresse der eingangs beschriebenen Art einen effektiven und zuverlässigen Austrag des Filterkuchens zu gewährleisten und dabei die Produktivität der Filterpresse zu steigern und den Verbrauch an Filtergewebe wesentlich einzuschränken.

Ausgehend von einer Filterpresse der eingangs genannten Art, wird diese Aufgabe erfindungsgemäß dadurch gelöst, daß jeweils zwei Walzen, über die das Filtergewebe der zugehörigen Filterplatte verläuft, beidseitig des Filtergewebes angeordnet sind, welches als einlagiges Tuch ausgeführt ist, S-förmig über die Walzen geführt wird und mit seinen Enden am oberen und unteren Teil der Filterplatte befestigt ist, wobei die Walzen mit einem Hubmechanismus zu deren vertikaler Verschiebung in bezug auf das Filtergewebe verbunden sind.

Mit der erfindungsgemäßen Filterpresse ist es möglich, aufgrund der Verwendung eines einlagigen Filtertuchs anstelle eines zweilagigen Filtertuchs die Produktivität der Filterpresse deutlich zu steigern, da der hydraulische Widerstand erheblich verringert wird. Aufgrund der fortlaufend nacheinander erfolgenden Umlenkung aller mit Filterkuchen belegten Bereiche des Filtertuchs wird mit der Filterpresse gemäß der Erfindung eine außerordentlich zuverlässige Ablösung auch stark anhaftender Filterkuchen erzielt. Aufgrund der Verwendung eines einlagigen Filtertuchs wird des weiteren eine Möglichkeit zur sehr effektiven Regenerierung des Filtertuchs während des Betriebes geschaffen. Ferner wird auch der Verbrauch an Filtergewebe mittels der erfindungsgemäßen Filterpresse wesentlich reduziert.

Gemäß einer bevorzugten Ausführungsform der Erfindung sind die jeweils beiden Walzen, über die das Filtergewebe der zugehörigen Filterplatte verläuft, zu einem beweglichen Block vereinigt.

Auf diese Weise wird die Führung jeweils zweier Walzen und ihre Verbindung mit dem Hubmechanismus sowie ihre synchrone Bewegung während des Austragsvorgangs wesentlich vereinfacht.

Eine weitere Ausgestaltung der erfindungsgemäßen Filterpresse sieht vor, daß das obere Ende des Filtertuches jeder Filterplatte durch eine Spannvorrichtung gehalten wird, die sich im oberen Teil der Filterplatte befindet.

Die im Verlauf der Bewegung der Walzen mittels der Hubvorrichtung ansonsten eintretende Entspannung des Filtertuches kann durch eine von der Spannvorrichtung bewirkte Verschiebung der oberen Befestigungslinie des Filtertuches ausgeglichen werden, so daß die Tuchspannung beibehalten wird.

Schließlich wird nach der Erfindung noch vorgeschlagen, daß in den beweglichen Blöcken Sprühdüsen angeordnet sind, die auf die mit Filterkuchen in Kontakt kommende Seite des Filtergewebes ausgerichtet sind.

Auf diese Weise läßt sich eine sehr einfache und gründliche Regenerierung des Filtergewebes erzielen. Des weiteren kann der Vorgang der Geweberegenerierung beim Rücklauf des Blocks in die Ausgangsstellung durchgeführt werden, so daß für den Reinigungsvorgang kein zusätzlicher Zeitverlust für diese Hilfsoperation auftritt, wodurch die Produktivität der erfindungsgemäßen Filterpresse weiter gesteigert werden kann.

Die Erfindung ist in der beigefügten Zeichnung in schematischer Darstellung illustriert. Es zeigt:
- Fig. 1: eine Filterpresse in der Seitenansicht;
- Fig. 2: eine Filterplatte mit dem Filtergewebe und den Walzen zum Austrag des Filterkuchens;
- Fig. 3: einen Ausschnitt des Filterplattenpaketes während des Filtrationsprozesses (Bildung des Filterkuchens);
- Fig. 4 bis 6: eine Filterplatte im Querschnitt während verschiedener Phasen des Filterkuchenaustrags und
- Fig. 7: einen vergrößerten Querschnitt durch den beweglichen Block mit zwei Walzen und Sprühdüsen zur Geweberegenerierung.

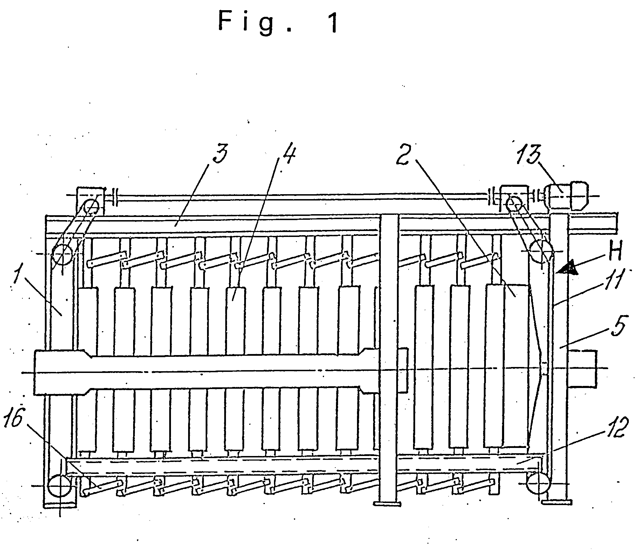

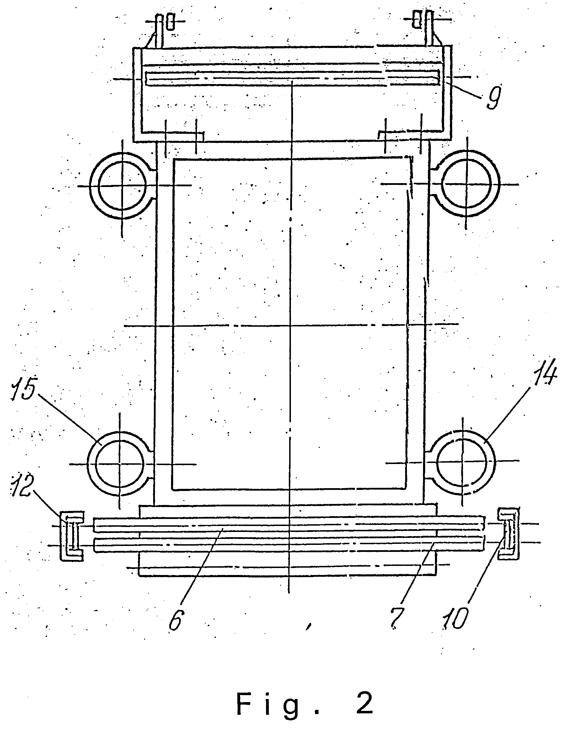

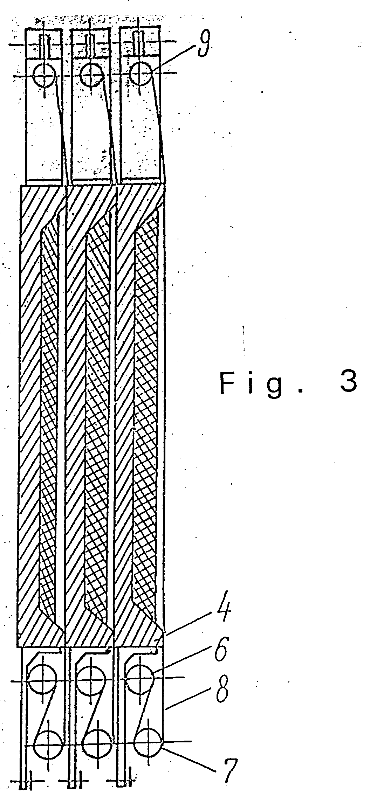

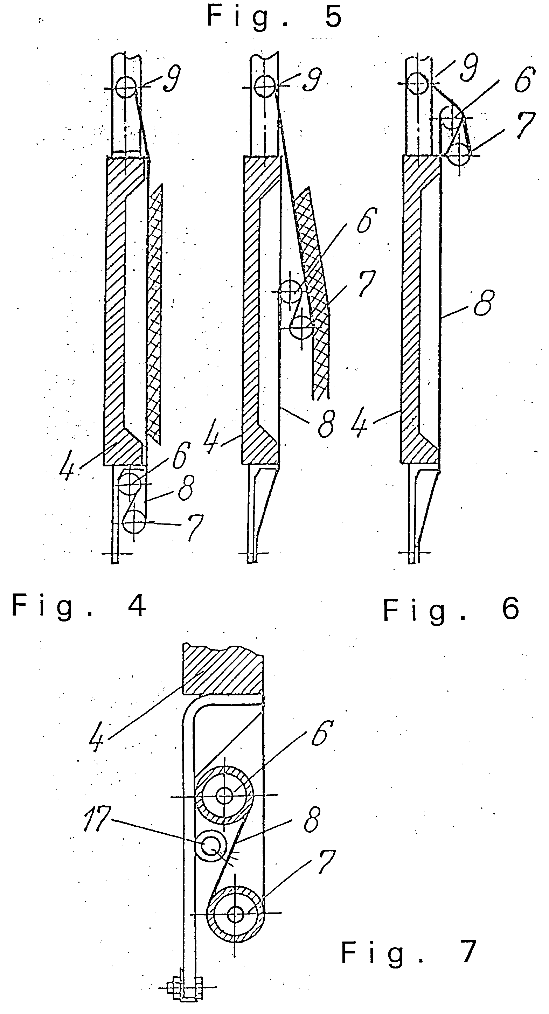

Wie aus Fig. 1 ersichtlich ist, besteht die Filterpresse aus einer Stützplatte 1 und einer Anpreßplatte 2, zwischen denen in einem Rahmen 3 eine Vielzahl von Filterplatten 4 angeordnet ist. Die Filterpresse ist mit einer Preßvorrichtung 5 versehen, mit der die in Fig. 1 in maximaler Abstandsstellung abgebildeten Filterplatten 4 auf Block zusammengepreßt werden können. Die Filterplatten 4 sind durch Abstandhalter 16 miteinander verbunden.

Die Fig. 2 und 3 zeigen, daß jeder Platte zwei Walzen 6 und 7 zugeordnet sind, über die ein Filtertuch 8 S-förmig (s. Fig. 3) verläuft. Das Filtertuch 8 wird im oberen Teil der Platte von der Spannvorrichtung 9 gehalten. Jeweils zwei Walzen 6 und 7 sind durch zwei Lagerplatten 10 zu einem Block vereinigt.

Wie wiederum in Fig. 1 dargestellt ist, ermöglicht eine Hubvorrichtung H eine Vertikalverschiebung der in den Blöcken zusammengefaßten Walzen 6 und 7 entlang dem Verlauf der Filtertücher 8. Dazu sind die Lagerplatten 10 mit Querstreben 12 verbunden, die sich über die gesamte Länge des in Austragsstellung befindlichen Filterplattenpakets erstrecken. An den Querstreben 12 sind Ketten 11 angebracht, auf die über einen Kettentrieb sowie zwei Getriebe ein Antriebsmotor 13 wirkt.

Der Fig. 2 ist zu entnehmen, daß die Filterplatten 4 jeweils einen Einfüllstutzen 14 für die zu filtrierende Suspension sowie einen Abführstutzen 15 für das Filtrat besitzen. Beim Zusammenpressen der Filterplatten 4 bilden die jeweils in Reihe angeordneten Einfüllstutzen 14 und Abführstutzen 15 Sammler für die entsprechenden Medien.

Fig. 7 zeigt, daß in den beweglichen Blöcken mit den Walzen 6 und 7 Sprühdüsen 17 angeordnet sind, die jeweils auf die Arbeitsfläche des Filtertuchs 8 ausgerichtet sind. Die Sprühdüsen 17 sind an eine nicht dargestellte Druckwasserversorgung angeschlossen.

Nachfolgend wird der Ablauf eines Filtriervorgangs mit der erfindungsgemäßen Filterpresse erläutert:

Die zu reinigende Suspension wird unter Überdruck dem zwischen Stützplatte 1 und Antriebsplatte 2 eingespannten Satz von Filterplatten 4 über den Sammler, der von den Einfüllstutzen 14 für die Suspension gebildet wird, zugeführt. Nach dem Füllen der Filterkammern in der Filterpresse mit der Suspension wird ein Überdruck erzeugt, der bewirkt, daß die flüssige Phase durch die Filtertücher 8 hindurchtritt und über den zweiten Sammler, der von den Stutzen 15 gebildet wird, abgeführt wird. Die feste Phase in Form eines Filterkuchens wird dagegen von den Filtertüchern 8 zurückgehalten.

Nach Erreichen einer geforderten Schichtdicke wird die Filterpresse mit Preßluft durchgeblasen, um Suspensionsreste zu entfernen. Daraufhin wird die Anpreßplatte 2 von der Preßvorrichtung 5 in ihre Endlage zurückgeführt, wodurch die Filterplatten 4 auf ihren von der Länge der Abstandhalter 16 bestimmten Maximalabstand auseinandergezogen werden.

Anschließend wird der Vorgang des Filterkuchenaustrags eingeleitet, indem der Antriebsmotor 13 die Ketten 11 und damit die Querstreben 12 nach oben bewegt. Dabei werden die beweglichen Blöcke und die darin integrierten Walzen 6 und 7 von den Querstreben 12 mitgenommen. Die sich dabei ansonsten einstellende Entspannung der oberhalb der Walzen 6 und 7 befindlichen Abschnitte der Filtertücher 8 wird durch die Spannvorrichtungen 9 kompensiert, wodurch die Filtertücher 8 auch weiterhin gespannt bleiben. Durch die Umlenkung der Filtertücher 8 an den Walzen 7 löst sich der Filterkuchen bei der Aufwärtsbewegung der Walzen 6 und 7 fortlaufend von den Filtertüchern 8 und fällt in den Zwischenraum zwischen den Filterplatten 4.

Während der Abwärtsbewegung der beweglichen Blöcke wird aus den Sprühdüsen 17, die unterhalb der Walzen 6 angeordnet sind, Wasser auf die Arbeitsflächen der Filtertücher 8 gesprüht, um somit eventuell vorhandene Verunreinigungen auszuspülen. Die Sprühdüsen 17 werden nur dann aktiv, wenn eine tatsächliche Notwendigkeit zur Reinigung des Filtergewebes besteht.

Nachdem die beweglichen Blöcke in ihre untere Endposition zurückgelangt sind, können die Filterplatten 4 wieder auf Block zusammengeschoben werden, und ein erneuter Filtriervorgang kann beginnen.

## Patentansprüche

1. Filterpresse zur Filtration von Suspensionen, bestehend aus einem Rahmen (3), einer daran befestigten Stützplatte (1) und einer Anpreßplatte (2), einem Satz vertikaler Filterplatten (4), die zwischen der Stützplatte (1) und der Anpreßplatte (2) angeordnet sind, wobei jede Filterplatte (4) auf der flüssigkeitsabführenden Seite mit einem Filtertuch (8) versehen ist, das über zwei Walzen (6,7) verläuft, sowie einer Preßvorrichtung (5) zum Zusammenpressen der Filterplatten (4), einer Vorrichtung (11,12,13) zum Austrag des Filterkuchens sowie einer Vorrichtung (17) zur Geweberegenerierung, dadurch gekennzeichnet, daß jeweils zwei Walzen (6,7), über die das Filtertuch (8) der zugehörigen Filterplatte (4) verläuft, beidseitig des Filtertuchs (8) angeordnet sind, welches als einlagiges Tuch ausgeführt ist, S-förmig über die Walzen (6,7) geführt wird und mit seinen Enden am oberen und unteren Teil der Filterplatte (4) befestigt ist, wobei die Walzen (6,7) mit einer Hubvorrichtung (H) zu ihrer vertikalen Verschiebung in bezug auf das Filtertuch (8) verbunden sind.

2. Filterpresse nach Anspruch 1, dadurch gekennzeichnet, daß jeweils die beiden Walzen (6,7) in einem beweglichen Block vereinigt sind.

3. Filterpresse nach Anspruch 1 oder 2, dadurch gekennzeichnet, daß das obere Ende des Filtertuches (8) jeder Filterplatte (4) durch eine Spannvorrichtung (9) gehalten ist, die sich im oberen Teil der Filterplatte (4) befindet.

4. Filterpresse nach Anspruch 1, dadurch gekennzeichnet, daß in den beweglichen Blöcken Sprühdüsen (17) angebracht sind, die auf die dem Filterkuchen zugewandte Seite des Filtertuchs (8) ausgerichtet sind.

## Claims

1. Filter press for filtering suspensions, consisting of a frame (3), a Support plate (1) secured thereto, and a pressure plate (2), a set of vertical filter plates(4) arranged between the support plate (1) and the pressure plate (2), each filter plate (4) being provided with a filter cloth (8) at its liquid discharge side which extends over two rollers (6, 7), and also a press device (5) for pressing the filter plates (4) together, a device (11, 12, 13) for discharging the filter cake, and also a device (17) for fabric regeneration, characterised in that in each case two rollers (6, 7) over which the filter cloth (8) of the associated filter plate (4) extends are arranged to either side of the filter cloth (8), which is in the form of a single layer cloth, runs in S-shaped configuration over the rollers (6, 7), and is secured by its ends to the upper and lower parts of the filter plate (4), the rollers (6, 7) being connected with a lifting device (H) for vertical movement relative to the filter cloth (8).

2. Filter press according to claim 1, characterised in that in each case the two rollers (6, 7) are conjoined in a single displaceable unit.

3. Filter press according to claim 1 or 2, characterised in that the upper end of the filter cloth (8) of each filter plate (4) is held by a tensioning device (9) located in the upper part of the filter plate (4).

4. Filter press according to claim 1, characterised in that spray nozzles (17) are arranged in the displaceable units, directed towards the side of the filter cloth (8) that faces the filter cake.

## Revendications

1. Filtre-presse pour la filtration de suspensions, constitué d'un cadre (3), d'une plaque (1) d'appui qui y est fixée et d'une plaque (2) d'application d'une pression, d'un jeu de plaques (4) verticales de filtration, qui sont interposées entre la plaque (1) d'appui et la plaque (2) d'application d'une pression, chaque plaque de filtration étant munie, du côté d'évacuation du liquide, d'une toile (8) filtrante qui s'étend sur deux rouleaux (6,7), ainsi que d'un dispositif (5) de pressage, destiné à presser ensemble les plaques (4) de filtration, d'un dispositif (11,12,13) de déchargement du gâteau de filtre, ainsi que d'un dispositif (17) de régénération de tissu caractérisé en ce que deux rouleaux (6,7) sur lesquels la toile (8) filtrante de la plaque (4) de filtration correspondante s'étend, sont disposés de part et d'autre de la toile (8) filtrante laquelle est constituée en toile à une seule couche, passe en forme de S sur les rouleaux (6,7) et est fixée par ses extrémités à la partie supérieure et à la partie inférieure de la plaque (4) de filtration, les rouleaux (6,7) étant reliés à un dispositif (H) de levage pour leur déplacement vertical par rapport à la toile (8) filtrante.

2. Filtre-presse suivant la revendication 1, caractérisé en ce que les deux rouleaux respectifs sont réunis en un bloc mobile.

3. Filtre-presse suivant la revendication 1 ou 2, caractérisé en ce que l'extrémité supérieure de la toile (8) filtrante de chaque plaque (4) de filtration est maintenue par un dispositif (9) de serrage, qui se trouve dans la partie supérieure de la plaque (4) de filtration.

4. Filtre-presse suivant la revendication 1, caractérisé en ce que dans les blocs mobiles sont prévues des buses (17) de pulvérisation, dirigées sur la face de la toile (8) filtrante, qui est tournée vers le gâteau de filtre.
